# EUROPÄISCHE PATENTSCHRIFT

(11) **EP 2 212 140 B1**
(45) Veröffentlichungstag und Bekanntmachung des Hinweises auf die Patenterteilung: **23.04.2014**
(21) Anmeldenummer: 08840854.7
(22) Anmeldetag: 07.10.2008
(51) Int. Cl.: B60J 7/04

(54) **LAMELLENDACH MIT UNTERSCHIEDLICH DIMENSIONIERTEN ZAPFEN**
SEGMENTED ROOF COMPRISING DIFFERENTLY DIMENSIONED PINS
TOIT À LAMELLES COMPORTANT DES TENONS DE DIMENSIONS DIFFÉRENTES

(30) Priorität: 19.10.2007 DE 102007050462
(43) Veröffentlichungstag der Anmeldung: 04.08.2010
(73) Patentinhaber: Bayer Intellectual Property GmbH, 40789 Monheim (DE)
(72) Erfinder: DORIN, Florian, 50679 Köln (DE); LANGE, Stephan, 42349 Wuppertal (DE); BRAMBRINK, Roland, 40880 Ratingen (DE); GROSSER, Ulrich, 51515 Kürten (DE)
(74) Vertreter: BIP Patents
(86) Internationale Anmeldenummer: PCT/EP2008/008456
(87) Internationale Veröffentlichungsnummer: WO 2009/052945

(56) Entgegenhaltungen:
- EP-A- 0 897 820
- DE-A1- 10 320 538
- DE-A1- 19 711 333
- DE-C1- 4 233 507

## Beschreibung

Die vorliegende Erfindung betrifft ein Lamellendach für ein Kraftfahrzeug mit mehreren stoffschlüssig und/oder formschlüssig miteinander verbundenen Lamellen, die seitlich durch Zapfen in Führungsschienen geführt und zwischen einer geschlossenen Position, in der die Lamellen dicht aneinander schließen, und einer geöffneten Position, in der die Lamellen in einem Dachbereich zusammengeschoben und gefaltet sind, beweglich sind, dadurch gekennzeichnet, dass jede Lamelle [8] außer der letzten Lamelle [10] zwei gegenüberliegende Seiten A aufweist und zwei gegenüberliegende Seiten B aufweist, und die Lamellen untereinander entlang der Seiten B verbunden sind, und jede Seite A zwei Zapfen [4], [5] aufweist, wobei eine Teilmenge der Zapfen [4] anders dimensioniert ist als die andere Teilmenge der Zapfen [5], wobei zwei auf einer Seite A liegende Zapfen unterschiedlich dimensioniert sind, und wobei zwei sich an den gegenüberliegenden Seiten A einer Lamelle gegenüberliegende Zapfen jeweils gleich dimensioniert sind.

Beim Fahrzeugdach gemäß DE-Gebrauchsmuster 1 811 690 werden die beiden Führungsstellen jeder Lamelle von Zapfen gebildet, die jeweils von einer an der Unterseite der betreffenden Lamelle angebrachten Führungswange seitlich abstehen. Die beiden Zapfen liegen in unterschiedlicher Höhe und greifen in parallel in Abstand voneinander liegende Führungsbahnen einer dachfesten Führungsschiene ein. Beim Öffnen des Daches verlassen die jeweils in Öffnungsrichtung vorne liegenden Zapfen nacheinander die zugehörige Führungsbahn, während gleichzeitig die betreffende Lamelle in nicht näher offenbarter Weise zu einer Schwenkbewegung um den anderen, in seiner Führungsbahn verbleibenden Zapfen veranlasst wird.

Ein weiteres Fahrzeugdach, bei dem zur Erhöhung der Stabilität und zur sicheren Halterung der Lamellen beide Führungsstellen der Lamellen im gesamten Lamellen-Verstellbereich mit den Führungen in Eingriff gehalten sind, ist in der DE-Patentanmeldung P 41 23 229.1 beschrieben. Patentanmeldung EP 0 591 644 A2 beschreibt ein Fahrzeugdach, bei dem die Lamellen durchgehend in zwei Führungsschienen geführt werden und so eine dauerhafte Stabilität gewährleisten. Die Führungsschienen sind in Abstand zueinander angeordnet und führen die Lamellen derart, dass sie im Zustand eines geöffneten Daches rolloartig untereinander liegen. Das Patent DE 4415 649 beschreibt die Führung von Lamellen in einem Fahrzeugdach, bei der jede Lamelle seitlich mit je einer Kulissenführung versehen ist, in der ein hinterer Lagerpunkt der jeweils nach vorne anschließenden, nächsten Lamelle zwangsgeführt ist und die nach hinten abschließende Lamelle mittels einer separaten Steuereinrichtung aufstellbar ist. Die angeführten Literaturstellen beschreiben alle ausschließlich nicht stoffschlüssig und/oder formschlüssig miteinander verbundene Lamellensysteme.

DE 103 20 538 betrifft ein Fahrzeug mit einem Fahrzeugdach mit mehreren bewegbaren Dachelementen, die an seitlichen fahrzeugseitigen Führungen verschiebbar geführt sind und zwischen einer eine Dachöffnung verschließenden Schließstellung und einer die Dachöffnung freigebenden Offenstellung, in der sie in einem heckseitigen Ablageraum abgelegt sind, verstellbar sind.

DE 197 11 333 betrifft einen Lamellenhimmel für einen lichtdurchlässigen Abschnitt eines Fahrzeugdaches, insbesondere eines Kraftfahrzeuges, mit mindestens zwei Lamellen, die an ihren gegenüberliegenden stirnseitigen Enden über Führungselemente in ortsfesten, am Fahrzeug ausgebildeten Führungen jeweils geführt sind, wobei die Lamellen in einer Position den lichtdurchlässigen Abschnitt abdecken und wobei die Lamellen aus dieser Position in eine Position so zusammenschiebbar sind, der lichtdurchlässige Abschnitt freigegeben ist, wobei benachbarte Lamellen über ihre gesamte Länge jeweils lichtundurchlässig und gelenkig miteinander verbunden sind und die Lamellen durch die Führungen und die Führungselemente im zusammengeschobenen Zustand so angeordnet sind, daß Lamellen-Außenoberflächen an Lamellen-Außenoberflächen und Lamellen-Innenoberflächen an Lamellen-Innenoberflächen gegenüberstehen oder gegenüberliegen.

Eine Aufgabe der vorliegenden Erfindung war es daher, eine Führungskinematik für eine stoffschlüssig und/oder formschlüssig verbundene Lamellenstruktur zu entwickeln. Diese soll z.B. in einem Fahrzeugdach eingesetzt werden können. Diese Führungsschiene soll einerseits einen möglichst kleinen Bauraum einnehmen. Die Führungsschiene soll darüberhinaus geometrisch möglichst einfach sein und über die Höhe nur eine Nut haben. Weiterhin sollen die Lamellen planparallel zur Dachebene laufen und sich erst am Ende in einer Vorrichtung wie z.B. einem Verdeckkasten zusammenfalten können, und aus Gründen der Steifigkeit im Bereich der Planparallelität an allen vier Eckpunkten gelagert werden.

Die Aufgabe wird gelöst durch ein Lamellendach gemäß Anspruch 1.

Hierbei bedeutet der Ausdruck Lamellendach eine Vorrichtung aus abwechselnd steifen und flexiblen, parallel zueinander angeordneten Elementen, wie z.B. wenigstens 2 parallel zueinander angeordnete Lamellen [8] aus Kunststoff wie Polycarbonat (PC), Polymethylmethacrylat (PMMA, Acrylglas oder Plexiglas), wobei die Lamellen über den überwiegenden Teil, d.h. in der Regel über 75% und im Idealfall 100% der Lamellenlängsseiten durch Elastomer wie z.B. Polyurethan, thermoplastisches Polyurethan, oder Silikon stoffschlüssig und/oder formschlüssig verbunden sind.

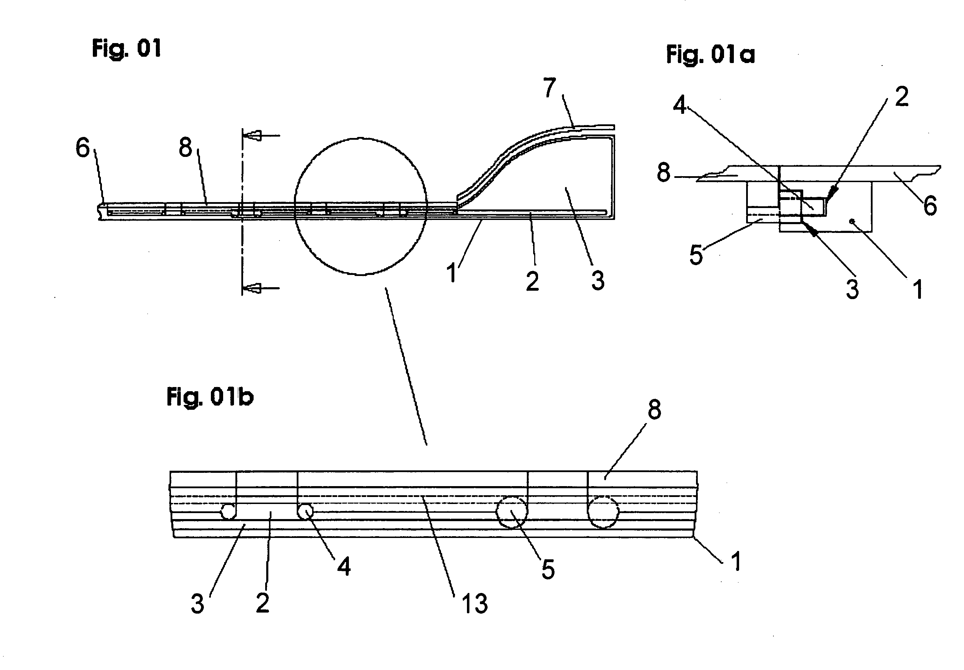

Die Führungsschiene [1], z.B. in Fig. 01, Fig. 01a und Fig. 01b besteht aus einer tiefen Ebene [2] und einer weiteren flachen Ebene [3], die hintereinander verlaufen. Hintereinander heisst hier, es gibt eine vordere und eine hintere Ebene, beide Ebenen verlaufen parallel zueinander entlang Teilen der Dachhaut. Die hintere Ebene ist so angeordnet, dass ein langer Zapfen durch die vordere Ebene ragen und in der hinteren Ebene geführt werden kann. In der vorderen Ebene kann gleichzeitig ein kürzerer Zapfen geführt werden, ohne durch die hintere Ebene beeinflusst zu werden. Diese Anordnung soll gewährleisten, dass die unterschiedlichen langen Zapfen (mit unter Umständen verschiedenen Querschnitten) zielgerichtet in der Führungsschiene geführt werden, d.h. zunächst einen Kurvenverlauf und abschliessend in einem definierten Bereich unterschiedlichen folgen. Die Anzahl der Ebenen kann natürlich frei variiert werden, so kann beispielsweise eine dritte oder gar vierte Ebene hinzugefügt werden, um ggf. einzelne Lamellen anders oder sogar einzeln führen zu können.

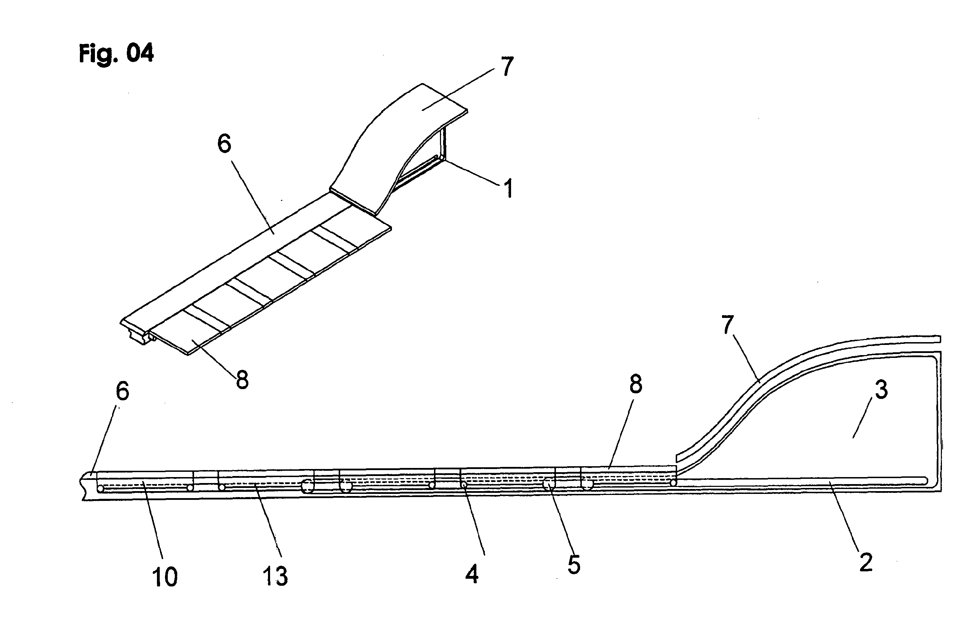

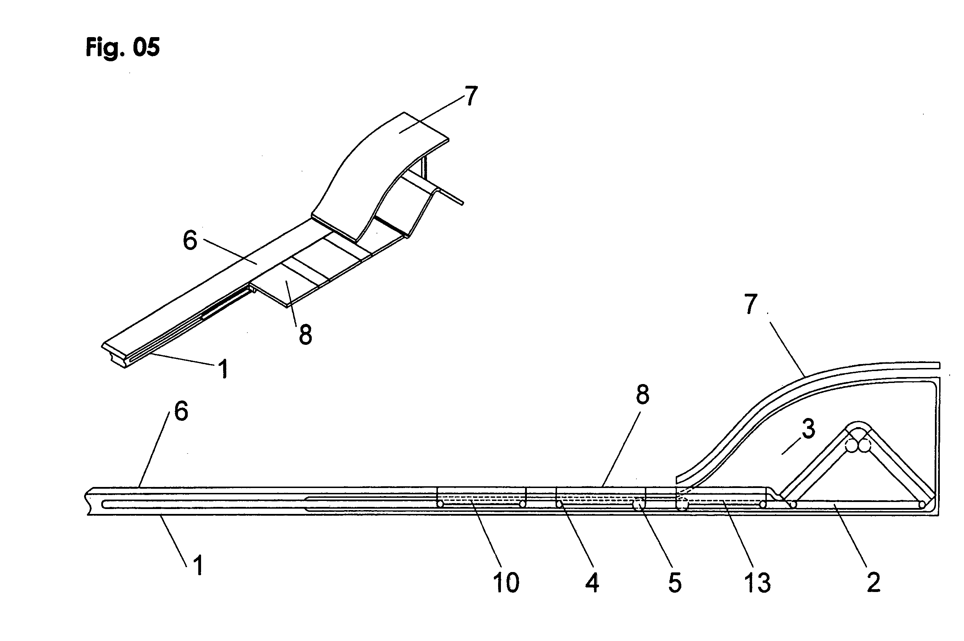

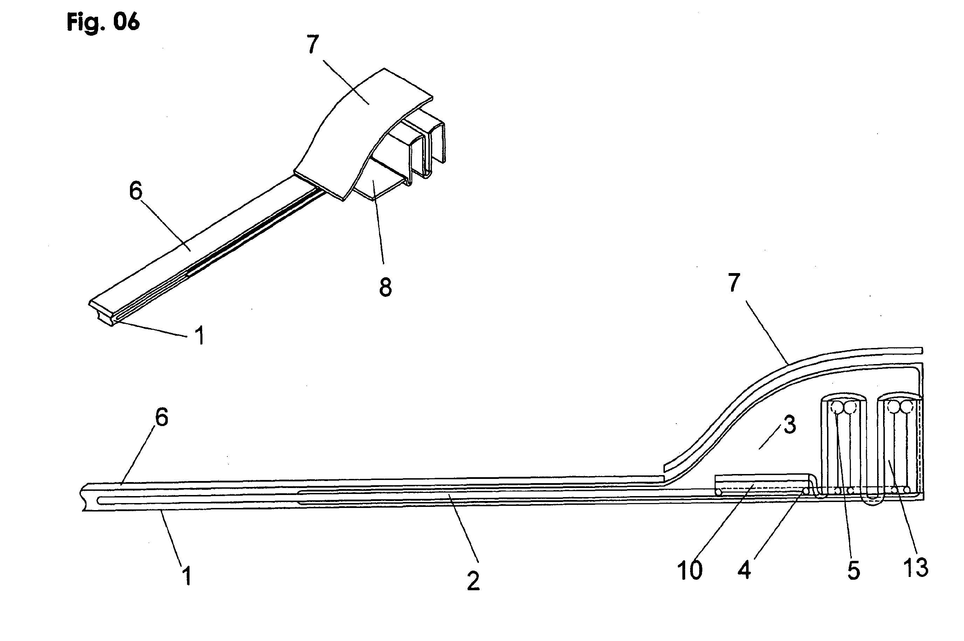

Die Auffaltungskinematik macht es notwendig, dass mindestens ein Element weiter "kontrolliert" geführt wird und das andere sich "frei" bewegen kann. Diese Ebenen werden über Nuten gebildet. In diese Nuten ragen unterschiedlich geformte Zapfen [4] und [5]. Über unterschiedliche Zapfenlängen oder -breiten wird der Verlauf der Zapfen in den Ebenen der Führungsschiene geregelt. Der längere Zapfen [4] läuft entlang der tiefen Ebene [2], der kürzere Zapfen [5] läuft entlang der flachen Ebene [3]. Durch die hintereinander liegenden Ebenen kann so Bauraumhöhe eingespart werden. Die Nuten können auch übereinander liegen. Beide Ebenen verlaufen parallel zur Außenhaut (Dachhaut) [6] bis zum Erreichen des Verdeckkastens [7], so dass die Lamellen [8] sich als durchgehende Fläche verschieben lassen. Erst innerhalb des Verdeckkastens laufen die Ebenen z.B. V-förmig auseinander, so dass beispielsweise, wie in Fig. 04, 05 oder 06 gezeigt, die Zapfen für die tiefe Ebene weiterhin entlang der Dachkontur bzw. waagerecht zu dieser verlaufen und die kurzen Zapfen nach oben gelenkt werden. Die Lamellen können selbstverständlich auch entgegen der Abbildungen nach unten aufgefaltet werden oder mittig. Ebenso ist es vorstellbar, dass nicht ausschließlich der lange Zapfen für die Auslenkung verantwortlich ist, ebenso kann der kurze Zapfen die Lamellen auslenken.

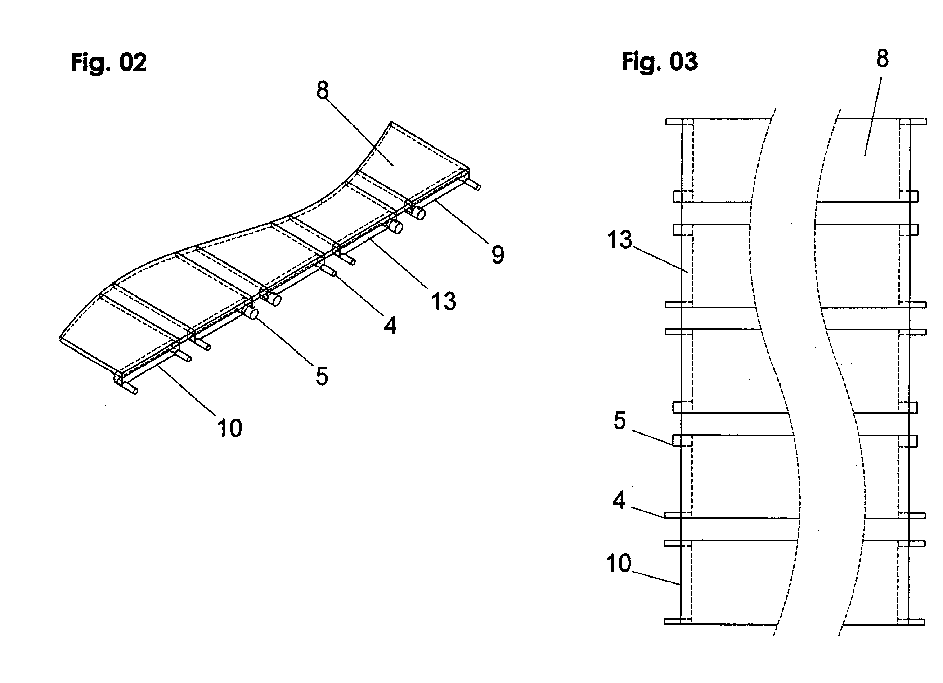

Die Ebenen müssen aber nicht nur über die Länge der Zapfen angesteuert werden. Es besteht auch die Möglichkeit, die Ansteuerung über unterschiedliche Querschnitte zu regeln, wie in Fig. 02 und Fig. 03 gezeigt.

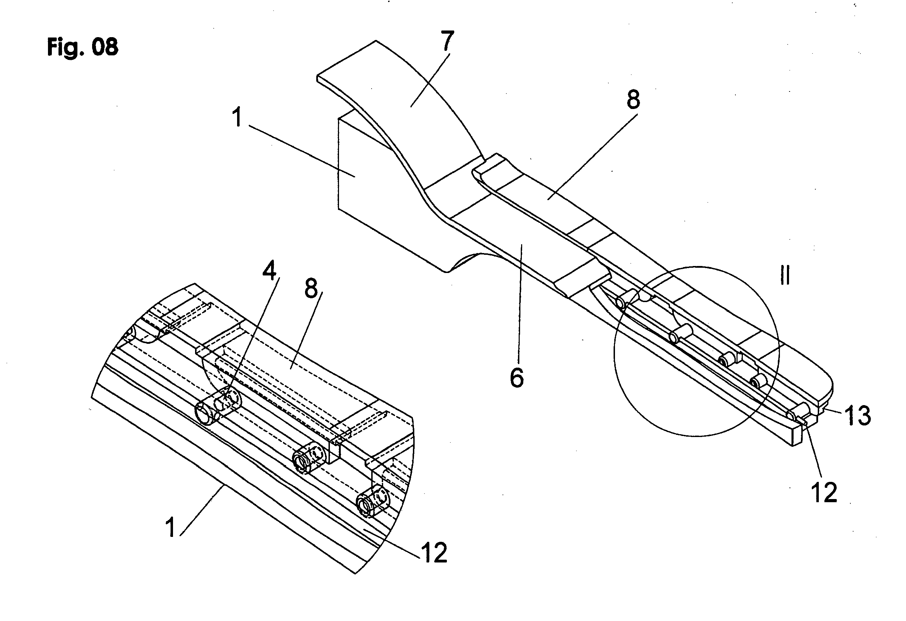

Z.B. sind an jeder Lamelle an den beiden Seiten A [9] je zwei Zapfen, bei jeder Stirnseite sind je ein kurzer und ein langer Zapfen. Lediglich bei der letzten Lamelle [10] können sich zwei gleiche Zapfen befinden, sofern sich diese nicht ebenfalls auffalten soll. Durch diese zwei Zapfen je Seite wird gewährleistet, dass das Dach auch im halb geöffneten Zustand parallel zur Dachhaut verlaufen kann und sich bei Wind und Schneelasten nicht unkontrolliert durchbiegt.
Die Lamellen können von z.B. von einer Kette [11] "Kettentrieb" (Fig. 08) oder einer Gewindestange [12] "Spindeltrieb" (Fig. 09) oder Riemenantrieb angetrieben werden. Seilzug sollte auch möglich sein (wie bei konventionellen Schiebedächern)

Die Zapfen selbst stellen ein sowohl translatorisches Lager entlang der Führungsschiene dar, als auch ein rotatorisches Lager um die eigene Achse.

Mit dieser Führungskinematik können stoffschlüssig und/oder formschlüssig verbundene Lamellenstrukturen bewegt werden, es ist jedoch auch vorstellbar, dass einzelne nicht stoffschlüssig und/oder formschlüssig miteinander verbundene Lamellen auf diese Weise bewegt werden können.

Das vollständige Verschwinden der Lamellen und die Möglichkeit der teilweisen Öffnung bei planparallelen Flächen sind sowohl für das aerodynamische Verhalten als auch für das äußere Erscheinungsbild günstig.

Die Lamellen können sich unterhalb, oberhalb oder auf gleicher Höhe der Führungselemente [13], d.h. der Halter mit Zapfen befinden. Wenn die Lamellen auf gleicher Höhe der Führungselemente liegen, wird so durch die Lamellen eine Vertiefung gebildet, gleiches gilt für den Fall, dass die Lamellen unterhalb der Führungselemente liegen. Wenn die Lamellen oberhalb der Führungselemente liegen, kann so eine durchgehende Dachhaut erzeugt werden, was für das äußere Erscheinungsbild ebenfalls als günstig anzusehen ist. Darüberhinaus stehen somit keine Ecken oder Kanten über, an denen im Falle eines Unfalls Personen verletzt werden könnten.

Die Führungsschienen sind sowohl für Dachstrukturen mit Lamellen, die quer als auch längs zur Fahrtrichtung angeordnet sind, einzusetzen.

Die Erfindung soll durch folgende Figuren weiter erläutert werden:
Fig. 01 Seitenansicht Schnitt - stoffschlüssige Lamellen mit Verdeckkasten
Fig. 01a Schnitt - Führungsschiene mit Zapfen
Fig. 01b Detailansicht - Schnitt - Lamellen mit Führungselementen
Fig. 02 Isometrische Ansicht Lamellen mit Zapfen an den Stirnseiten bzw.
Führungselementen
Fig. 03 Aufsicht Lamellen mit Führungselementen
Fig. 04 geschlossenes Dach und entsprechender Isometrie
Fig. 05 halb geöffnetes Dach und entsprechender Isometrie
Fig. 06 geöffnetes Dach und entsprechender Isometrie

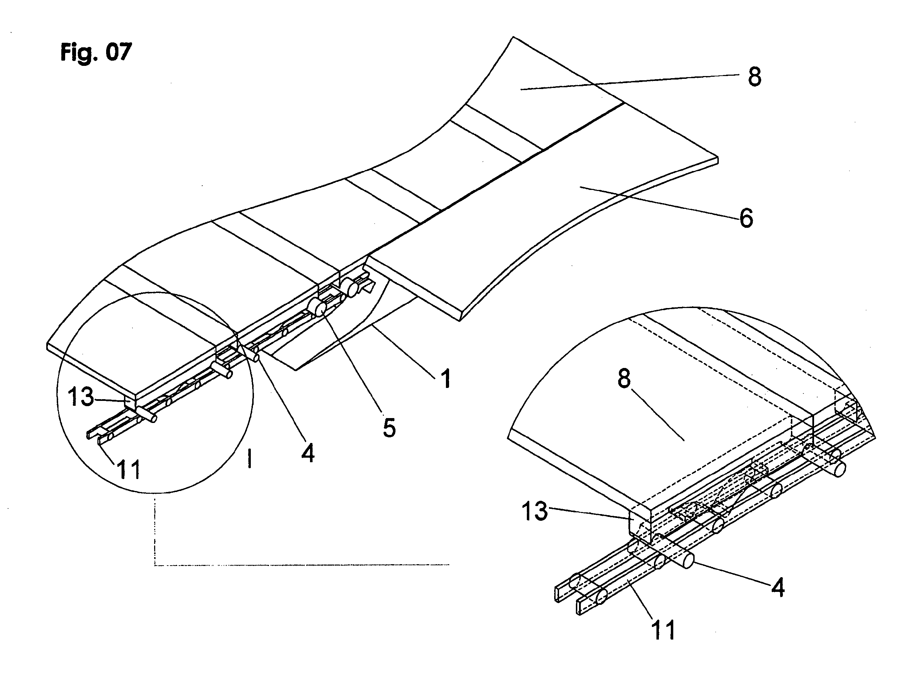

Fig. 07 Antriebskonzept Kettentrieb mit entsprechenden Detail
Fig. 08 Antriebskonzept Spindeltrieb mit entsprechenden Detail

In den Figuren bedeutet
[1] Führungsschiene
[2] tiefe Ebene
[3] flache Ebene
[4] längerer Zapfen
[5] kürzerer Zapfen
[6] Dachhaut
[7] Verdeckkasten
[8] Lamelle
[9] Seite A
[10] letzte Lamelle
[11] Kette
[12] Gewindestange
[13] Führungselement (Halter mit Zapfen)

## Patentansprüche

1. Lamellendach für ein Kraftfahrzeug mit mehreren stoffschlüssig und/oder formschlüssig miteinander verbundenen Lamellen [8] und [10], die seitlich durch Zapfen [4] und [5] in Führungsschienen [1] geführt und zwischen einer geschlossenen Position, in der die Lamellen [8] und [10] dicht aneinander schließen, und einer geöffneten Position, in der die Lamellen [8] und [10] in einem Dachbereich zusammengeschoben und gefaltet sind, beweglich sind, wobei jede Lamelle [8] außer der letzten Lamelle [10] zwei gegenüberliegende Seiten A aufweist und zwei gegenüberliegende Seiten B aufweist, und die Lamellen [8] untereinander entlang der Seiten B verbunden sind, wobei
jede Seite A zwei Zapfen [4], [5] aufweist, wobei eine Teilmenge der Zapfen [4] anders dimensioniert ist als die andere Teilmenge der Zapfen [5], wobei zwei auf einer Seite A liegende Zapfen [4] und [5] unterschiedlich dimensioniert sind, und wobei zwei sich an den gegenüberliegenden Seiten A einer Lamelle [8] gegenüberliegende Zapfen [4] und [5] jeweils gleich dimensioniert sind, **dadurch gekennzeichnet, dass** die Führungsschiene [1] aus einer tiefen Ebene [2] und einer flachen Ebene [3] besteht, wobei die Ebenen quer zur Erstreckung der Führungsschiene [1] hintereinander verlaufen und über Nuten gebildet werden, wobei die Führungsschiene [1] ferner derart ausgebildet ist, dass die tiefe Ebene [2] im Bereich des Verdeckkastens [7] des Lamellendachs die eine Teilmenge der Zapfen [4] weiter kontrolliert führt und die andere Teilmenge der Zapfen [5] sich in der flachen Ebene [3] frei bewegen kann.

2. Lamellendach nach Anspruch 1, **dadurch gekennzeichnet, dass** die zwei gegenüberliegenden Seiten A entlang der Fahrzeugquerrichtung und die zwei gegenüberliegenden Seiten B entlang der Fahrzeuglängsrichtung verlaufen.

3. Lamellendach nach Anspruch 1, **dadurch gekennzeichnet, dass** zwei vor und hinter der stoffschlüssigen und/oder formschlüssigen Verbindung auf zwei miteinander verbundenen Lamellen nebeneinanderliegende Zapfen jeweils gleich dimensioniert sind.

4. Lamellendach nach Anspruch 1, **dadurch gekennzeichnet, dass** eine Teilmenge der Zapfen länger ist als die andere Teilmenge der Zapfen.

5. Lamellendach nach Anspruch 1, **dadurch gekennzeichnet, dass** eine Teilmenge der Zapfen breiter ist als die andere Teilmenge der Zapfen.

6. Lamellendach nach Anspruch 4, **dadurch gekennzeichnet, dass** die tiefe Ebene [2] und die flache Ebene [3] bis zum Erreichen eines Verdeckkastens [7] parallel zur Außenhaut (Dachhaut) [6] verlaufen

7. Lamellendach nach Anspruch 4, **dadurch gekennzeichnet, dass** die tiefe Ebene [2] und die flache Ebene [3] innerhalb des Verdeckkastens V-förmig auseinanderlaufen.

8. Lamellendach nach Anspruch 1, **dadurch gekennzeichnet, dass** die letzte Lamelle [10] nur Zapfen gleicher Dimensionierung aufweist.

9. Lamellendach nach Anspruch 1, **dadurch gekennzeichnet, dass** die Faltanordung mit einer Antriebseinrichtung bewegt wird, wobei die Antriebseinrichtung bevorzugt eine Kette [11], eine Gewindestange oder ein Seilzug oder Riemenantrieb ist.

## Claims

1. Segmented roof for a motor vehicle comprising a plurality of segments [8] and [10] which are connected to one another in a cohesively bonded and/or interlocking manner, are guided laterally in guide rails [1] by means of pins [4] and [5] and are movable between a closed position, in which the segments [8] and [10] are closely contiguous to one another, and an open position, in which the segments [8] and [10] are pushed together and folded in a roof region, apart from the last segment [10], each segment [8] having two opposite sides A and two opposite sides B, and the segments [8] being connected to one another along the sides B, each side A having two pins [4], [5], one subset of the pins [4] being differently dimensioned from the other subset of the pins [5], two pins [4] and [5] located on one side A being differently dimensioned, and two opposite pins [4] and [5] of on the opposite sides A of a segment [8] each being identically dimensioned, **characterized in that** the guide rail [1] comprises a deep plane [2] and a shallow plane [3], the planes running one behind the other transversely with respect to the extent of the guide rail [1] and being formed via grooves, the guide rail [1] furthermore being formed in such a manner that the deep plane [2] continues to guide the one subset of the pins [4] in a controlled manner in the region of the convertible top compartment [7] of the segmented roof and the other subset of the pins [5] can move freely in the shallow plane [3].

2. Segmented roof according to Claim 1, **characterized in that** the two opposite sides A run along the transverse direction of the vehicle and the two opposite sides B run along the longitudinal direction of the vehicle.

3. Segmented roof according to Claim 1, **characterized in that** two pins located next to each other upstream and downstream of the cohesively bonded and/or interlocking connection on two segments connected to each other are each identically dimensioned.

4. Segmented roof according to Claim 1, **characterized in that** one subset of the pins is longer than the other subset of the pins.

5. Segmented roof according to Claim 1, **characterized in that** one subset of the pins is wider than the other subset of the pins.

6. Segmented roof according to Claim 4, **characterized in that** the deep plane [2] and the shallow plane [3] run parallel to the outer skin (roof skin) [6] as far as a convertible top compartment [7].

7. Segmented roof according to Claim 4, **characterized in that** the deep plane [2] and the shallow plane [3] diverge in a V-shaped manner within the convertible top compartment.

8. Segmented roof according to Claim 1, **characterized in that** the last segment [10] only has pins of identical dimensioning.

9. Segmented roof as claim in Claim 1, **characterized in that** the folding arrangement is moved with a driving device, the driving device preferably being a chain [11], a threaded rod or a cable pull or belt drive.

## Revendications

1. Toit à lamelles pour un véhicule automobile, comprenant plusieurs lamelles (8) et (10) assemblées les unes aux autres par engagement par liaison de matière et/ou par engagement par coopération de forme, lesquelles sont guidées latéralement par des tenons (4) et (5) dans des glissières (1) et peuvent être déplacées entre une position fermée dans laquelle les lamelles (8) et (10) sont fermées hermétiquement les unes contre les autres et une position ouverte dans laquelle les lamelles (8) et (10) sont rassemblées et pliées dans une région du toit, chaque lamelle (8) à l'exception de la dernière lamelle (10) présentant deux côtés opposés A et deux côtés opposés B, et les lamelles (8) étant assemblées les unes aux autres le long des côtés B,
chaque côté A présentant deux tenons (4), (5), une quantité partielle des tenons (4) étant dimensionnée différemment de l'autre quantité partielle de tenons (5), deux tenons (4) et (5) situés d'un côté A étant dimensionnés différemment, et deux tenons (4) et (5) opposés l'un à l'autre au niveau des côtés opposés A d'une lamelle (8) étant à chaque fois dimensionnés de manière identique, **caractérisé en ce que** la glissière (1) se compose d'un plan renfoncé (2) et d'un plan plat (3), les plans s'étendant l'un derrière l'autre transversalement à l'étendue de la glissière (1) et étant formés par des rainures, la glissière (1) étant réalisée en outre de telle sorte que le plan renfoncé (2) dans la région du compartiment de capote (7) du toit à lamelles guide ladite une quantité partielle de tenons (4) de manière plus contrôlée, et que l'autre quantité partielle de tenons (5) puisse se déplacer librement dans le plan plat (3).

2. Toit à lamelles selon la revendication 1, **caractérisé en ce que** les deux côtés opposés A s'étendent le long de la direction transversale du véhicule et les deux côtés opposés B s'étendent le long de la direction longitudinale du véhicule.

3. Toit à lamelles selon la revendication 1, **caractérisé en ce que** deux tenons juxtaposés sur deux lamelles assemblées l'une à l'autre, avant et derrière l'assemblage par engagement par liaison de matière et/ou par engagement par coopération de forme, sont à chaque fois dimensionnés de manière identique.

4. Toit à lamelles selon la revendication 1, **caractérisé en ce qu'**une quantité partielle des tenons est plus longue que l'autre quantité partielle de tenons.

5. Toit à lamelles selon la revendication 1, **caractérisé en ce qu'**une quantité partielle des tenons est plus large que l'autre quantité partielle de tenons.

6. Toit à lamelles selon la revendication 4, **caractérisé en ce que** le plan renfoncé (2) et le plan plat (3) s'étendent parallèlement à l'habillage extérieur (habillage du toit) (6) jusqu'à atteindre un compartiment de capote (7).

7. Toit à lamelles selon la revendication 4, **caractérisé en ce que** le plan renfoncé (2) et le plan plat (3) divergent l'un de l'autre en forme de V à l'intérieur du compartiment de capote.

8. Toit à lamelles selon la revendication 1, **caractérisé en ce que** la dernière lamelle (10) présente uniquement des tenons de même dimension.

9. Toit à lamelles selon la revendication 1, **caractérisé en ce que** l'agencement de pliage est déplacé avec un dispositif d'entraînement, le dispositif d'entraînement étant de préférence une chaîne (11), une tige filetée, un câble Bowden ou un entraînement à courroie.
